# EUROPÄISCHE PATENTSCHRIFT

(11) **EP 4 101 022 B1**
(45) Veröffentlichungstag und Bekanntmachung des Hinweises auf die Patenterteilung: **06.03.2024**
(21) Anmeldenummer: 20812238.2
(22) Anmeldetag: 19.11.2020
(51) Int. Cl.: H01M 50/10, A47L 9/28, A47L 11/40, B08B 3/02

(54) **ELEKTROGERÄT MIT MINDESTENS EINEM BATTERIEAUFNAHMEFACH**
ELECTRICAL DEVICE HAVING AT LEAST ONE BATTERY RECEPTACLE
DISPOSITIF ÉLECTRIQUE COMPORTANT AU MOINS UN LOGEMENT DE BATTERIE

(30) Priorität: 06.02.2020 DE 102020103089
(43) Veröffentlichungstag der Anmeldung: 14.12.2022
(73) Patentinhaber: Alfred Kärcher SE & Co. KG, 71364 Winnenden (DE)
(72) Erfinder: PFAFF, Peter, 71364 Winnenden (DE)
(74) Vertreter: Hoeger, Stellrecht & Partner Patentanwälte mbB
(86) Internationale Anmeldenummer: PCT/EP2020/082637
(87) Internationale Veröffentlichungsnummer: WO 2021/155969

(56) Entgegenhaltungen:
- EP-A1- 1 925 405
- WO-A1-2006/084561
- WO-A1-2018/068820
- WO-A1-2019/161995
- WO-A1-2019/164648
- JP-A- H02 200 230

## Beschreibung

Die Erfindung betrifft ein Elektrogerät mit einer Elektroeinrichtung und mit mindestens einem Batterieaufnahmefach, in das eine Batterie einsetzbar ist und dem eine Arretierungseinrichtung zugeordnet ist zum Arretieren der Batterie im Batterieaufnahmefach, wobei die Arretierungseinrichtung ein Arretierungsglied aufweist, das um eine Schwenkachse zwischen einer Arretierungsstellung und einer Freigabestellung hin und her verschwenkbar ist und das ein Arretierungselement aufweist, das in der Arretierungsstellung in das Batterieaufnahmefach hineinragt und in der Freigabestellung das Batterieaufnahmefach freigibt, wobei das Arretierungsglied mittels eines Federelements in die Arretierungsstellung vorgespannt ist.

Batteriebetriebene Elektrogeräte sind in vielfältiger Ausgestaltung bekannt. Sie haben den Vorteil, dass sie unabhängig von einem öffentlichen Energieversorgungsnetz betrieben werden können. Sie weisen eine Elektroeinrichtung und mindestens ein Batterieaufnahmefach auf. Die Elektroeinrichtung umfasst einen elektrischen Verbraucher, beispielsweise einen Elektromotor, und in das Batterieaufnahmefach kann eine Batterie eingesetzt werden, um die Elektroeinrichtung mit elektrischer Energie zu versorgen. In vielen Fällen ist die Batterie wiederaufladbar und kann bei Bedarf, beispielsweise zum Wiederaufladen der Batterie, dem Batterieaufnahmefach wieder entnommen werden.

Häufig weisen die Elektrogeräte mehrere Batterieaufnahmefächer auf, beispielsweise zwei Batterieaufnahmefächer, in die jeweils eine bevorzugt wiederaufladbare Batterie eingesetzt werden kann. Dies erlaubt es, die Elektroeinrichtung mit der elektrischen Energie mehrerer Batterien zu versorgen. Die Batterien können elektrisch in Reihe oder parallel zueinander geschaltet sein.

Elektrogeräte der hier in Rede stehenden Art können beispielsweise in Form eines Gartengeräts oder beispielsweise in Form eines Reinigungsgeräts ausgestaltet sein, insbesondere in Form eines Hochdruckreinigungsgeräts, eines Dampfreinigungs- oder Dampfstrahlgeräts, einer Bodenreinigungsmaschine, eines Sprühextraktionsgeräts, eines Sauggeräts, eines Saug- und/oder Wischroboters, einer Reinigungsmaschine für Hartflächen und/oder Hartböden und/oder textile Beläge, einer Kehrmaschine, eines Reinigungsroboters, eines motorgetriebenen forstwirtschaftlichen oder landwirtschaftlichen Geräts, einer Motorsäge, einer Heckenschere, eines Rasenmähers oder beispielsweise auch in Form einer Gartenpumpe, eines Laubsaugers oder eines Laubbläsers.

Um eine elektrische Verbindung zwischen einer Batterie und der Elektroeinrichtung herzustellen, sind in dem mindestens einen Batterieaufnahmefach üblicherweise mindestens zwei elektrische Kontaktelemente angeordnet, die beim Einsetzen der Batterie in das Batterieaufnahmefach korrespondierende Anschlusselemente der Batterie kontaktieren.

Um sicherzustellen, dass die Batterie im Batterieaufnahmefach zuverlässig eine Stellung beibehält, in der die mindestens zwei elektrischen Kontaktelemente des Batterieaufnahmefachs die korrespondierenden Anschlusselemente der Batterie kontaktieren, kommt üblicherweise eine Arretierungseinrichtung zum Einsatz, mit deren Hilfe die Batterie im Batterieaufnahmefach arretiert werden kann. Die Arretierungseinrichtung weist ein Arretierungsglied auf, das um eine Schwenkachse zwischen einer Arretierungsstellung und einer Freigabestellung hin und her verschwenkbar ist und das ein Arretierungselement aufweist, das in der Arretierungsstellung in das Batterieaufnahmefach hineinragt und in der Freigabestellung das Batterieaufnahmefach freigibt, wobei das Arretierungsglied mittels eines Federelements der Arretierungseinrichtung in die Arretierungsstellung vorgespannt ist. Das Arretierungselement der Arretierungseinrichtung kann in der Arretierungsstellung mit einem komplementär ausgestalteten Arretierungselement der Batterie zusammenwirken, um die Batterie im Batterieaufnahmefach zu arretieren. Ausgestaltungen dieser Art sind beispielsweise aus der WO 2019/161995 A1 und der WO 2018/068820 A1 bekannt.

Aufgabe der vorliegenden Erfindung ist es, ein Elektrogerät der eingangs genannten Art derart weiterzubilden, dass die Arretierungseinrichtung kostengünstig hergestellt und montiert werden kann.

Diese Aufgabe wird bei einem Elektrogerät der gattungsgemäßen Art erfindungsgemäß dadurch gelöst, dass das Arretierungsglied einen ersten Lagerzapfen und einen Lagerzapfen aufweist, die einander abgewandt und fluchtend zueinander ausgerichtet sind, wobei der erste Lagerzapfen in einen Lagerring eintaucht, der den ersten Lagerzapfen in Umfangsrichtung umgibt, und wobei der zweite Lagerzapfen eine erste Zapfenaufnahme durchgreift, die den zweiten Lagerzapfen in Umfangsrichtung teilweise umgibt.

Die Arretierungseinrichtung des erfindungsgemäßen Elektrogeräts weist ein um eine Schwenkachse verschwenkbares Arretierungsglied auf, das zwei Lagerzapfen umfasst, die einander abgewandt und koaxial zur Schwenkachse ausgerichtet sind. Das Arretierungsglied ist mittels der beiden Lagerzapfen zwischen der Arretierungsstellung und der Freigabestellung hin und her verschwenkbar gelagert. Lediglich der erste Lagerzapfen taucht hierbei in einen Lagerring ein, der den ersten Lagerzapfen in Umfangsrichtung umgibt, wohingegen der zweite Lagerzapfen eine erste Lagerzapfenaufnahme durchgreift, die den zweiten Lagerzapfen in Umfangsrichtung teilweise umgibt. Eine derartige Ausgestaltung ermöglicht es, das Arretierungsglied bei der Montage mit seinem ersten Lagerzapfen in den ersten Lagerring einzusetzen und den zweiten Lagerzapfen in die erste Lagerzapfenaufnahme einzuführen, so dass die erste Lagerzapfenaufnahme anschließend den zweiten Lagerzapfen in Umfangsrichtung teilweise umgibt. Es hat sich überraschenderweise gezeigt, dass eine schwenkbare Halterung des Arretierungsglieds an einem Lagerring, der den ersten Lagerzapfen in Umfangsrichtung umgibt, und an einer Lagerzapfenaufnahme, die den zweiten Lagerzapfen in Umfangsrichtung nur teilweise umgibt, bei gleichzeitiger Beaufschlagung des Arretierungsglieds mit einer Federkraft in Richtung auf die Arretierungsstellung eine zuverlässige Funktion der Arretierungseinrichtung sicherstellt, ohne dass der zweite Lagerzapfen von einem zweiten Lagerring aufgenommen wird, der den zweiten Lagerzapfen in Umfangsrichtung vollständig umgibt. Dies erlaubt es, die Arretierungseinrichtung kostengünstig herzustellen und zu montieren.

Die erste Lagerzapfenaufnahme bildet günstigerweise eine erste Lagergabel aus mit zwei Gabelzinken, zwischen denen der zweite Lagerzapfen positioniert werden kann.

Die erste Lagerzapfenaufnahme kann insbesondere einen Halbring ausbilden, der den zweiten Lagerzapfen in Umfangsrichtung über einen Winkelbereich von 180° umgibt.

Das Arretierungsglied bildet bei einer bevorzugten Ausgestaltung der Erfindung einen zweiarmigen Arretierungshebel aus. Der Arretierungshebel weist zwei Hebelarme auf, wobei am freien Ende von einem der beiden Hebelarme das Arretierungselement angeordnet ist, das in der Arretierungsstellung mit einem komplementär ausgestalteten Arretierungselement der in das Batteriefach eingesetzten Batterie zusammenwirkt.

Insbesondere kann vorgesehen sein, dass das Arretierungselement in der Arretierungsstellung in eine Arretierungsaufnahme der Batterie eintauchen kann, nachdem diese in das Batterieaufnahmefach eingeführt wurde.

Wie eingangs erwähnt, weist die Arretierungseinrichtung ein Federelement auf, das das Arretierungsglied mit einer Federkraft in Richtung auf die Arretierungsstellung beaufschlagt. Aus der Arretierungsstellung kann das Arretierungsglied entgegen der einwirkenden Federkraft in die Freigabestellung bewegt werden. Von besonderem Vorteil ist es, wenn das Federelement eine Schenkelfeder ausbildet mit einem den zweiten Lagerzapfen schraubenlinienförmig umgebenden Federabschnitt, von dem ein erster Schenkel und ein zweiter Schenkel abstehen, wobei der erste Schenkel am zweiten Lagerzapfen gehalten ist und der zweite Schenkel vom zweiten Lagerzapfen absteht und an einer Stützeinrichtung anliegt. Der Einsatz eines Federelements in Form einer Schenkelfeder mit einem ersten Schenkel und einem zweiten Schenkel hat den Vorteil, dass das Federelement zum einen ein Drehmoment auf den zweiten Lagerzapfen und das Arretierungsglied ausüben kann, so dass dieses in die Arretierungsstellung vorgespannt wird, zum anderen kann die Schenkelfeder auf den zweiten Lagerzapfen und das Arretierungsglied eine Kraft ausüben, die einem Lösen des zweiten Lagerzapfens aus der ersten Lagerzapfenaufnahme heraus entgegenwirkt. Mittels der Schenkelfeder kann daher das Arretierungsglied zuverlässig in Richtung der Arretierungsstellung vorgespannt und die Lagerzapfen können am Lagerring und an der ersten Lagerzapfenaufnahme gehalten werden. Auch die Montage des Arretierungsglieds zusammen mit der Schenkelfeder am Lagerring und an der ersten Lagerzapfenaufnahme gestaltet sich einfach.

Bei einer vorteilhaften Ausgestaltung der Erfindung weist der zweite Lagerzapfen eine Ausnehmung auf, die den ersten Schenkel der Schenkelfeder aufnimmt.

Die Ausnehmung ist günstigerweise schlitzförmig ausgestaltet.

Insbesondere kann vorgesehen sein, dass der zweite Lagerzapfen einen Längsschlitz aufweist, der in eine freie Stirnseite des zweiten Lagerzapfens einmündet und in den der erste Schenkel der Schenkelfeder eingeführt werden kann, indem diese auf den zweiten Lagerzapfen aufgesteckt wird.

Der zweite Schenkel der Schenkelfeder steht bei einer vorteilhaften Ausgestaltung der Erfindung ungefähr senkrecht zur Schwenkachse vom zweiten Lagerzapfen ab.

Bei einer bevorzugten Ausgestaltung der Erfindung ist das mindestens eine Batterieaufnahmefach mittels einer Zwischenwand von einem Arretierungsaufnahmeraum getrennt, in dem die dem Batterieaufnahmefach zugeordnete Arretierungseinrichtung angeordnet ist, und die Stützeinrichtung, an der der zweite Schenkel der Schenkelfeder anliegt, wird von der dem Arretierungsaufnahmeraum zugewandten Rückseite der Zwischenwand und von einem Wandvorsprung der Zwischenwand ausgebildet. Die Zwischenwand trennt das mindestens eine Batterieaufnahmefach von dem Arretierungsaufnahmeraum, der die dem Batterieaufnahmefach zugeordnete Arretierungseinrichtung aufnimmt. Die am zweiten Lagerzapfen der Arretierungseinrichtung angeordnete Schenkelfeder stützt sich mit ihrem zweiten Schenkel an der Rückseite der Zwischenwand und an einem von der Rückseite vorzugsweise vorspringenden Wandvorsprung der Zwischenwand ab. Die Anlage des zweiten Schenkels am Wandvorsprung ermöglicht es der Schenkelfeder, eine Kraft in axialer Richtung auf den zweiten Lagerzapfen auszuüben.

Bevorzugt weist der zweite Lagerzapfen eine freie Stirnseite auf, die dem Wandvorsprung gegenüberliegt.

Der von der Rückseite der Zwischenwand vorspringende Wandvorsprung bildet bei einer vorteilhaften Ausgestaltung der Erfindung eine Stützrippe aus, die von der Zwischenwand in den Arretierungsaufnahmeraum hineinragt.

Von Vorteil ist es, wenn die Stützrippe elastisch verformbar ist. Dies erlaubt es, die Stützrippe geringfügig elastisch zu verformen, um den ersten Lagerzapfen in den Lagerring und den zweiten Lagerzapfen in die erste Lagerzapfenaufnahme einzuführen.

Günstigerweise liegt die freie Stirnseite des zweiten Lagerzapfens an der Stützrippe an.

Bei einer bevorzugten Ausgestaltung des erfindungsgemäßen Elektrogeräts weist die Arretierungseinrichtung eine zweite Lagerzapfenaufnahme auf, die den ersten Lagerzapfen in Umfangsrichtung teilweise umgibt. Bei einer derartigen Ausgestaltung wird nicht nur der zweite Lagerzapfen sondern auch der erste Lagerzapfen in Umfangsrichtung teilweise von einer zugeordneten Lagerzapfenaufnahme umgeben. Zusätzlich taucht der ersten Lagerzapfen in einen Lagerring ein, der den ersten Lagerzapfen in Umfangsrichtung vollständig umgibt.

Die zweite Lagerzapfenaufnahme bildet bevorzugt eine zweite Lagergabel aus mit zwei Gabelzinken, die den ersten Lagerzapfen zwischen sich aufnehmen.

Von Vorteil ist es, wenn die zweite Lagerzapfenaufnahme einen Halbring ausbildet, der den ersten Lagerzapfen in Umfangsrichtung über einen Winkelbereich von 180° umgibt.

Bevorzugt weist das Arretierungsglied zwei Anschlagelemente auf, die an den einander zugewandten Seiten der beiden Lagerzapfenaufnahmen anliegen. Die beiden Lagerzapfenaufnahmen begrenzen somit eine Bewegung des Arretierungsglieds koaxial zur Schwenkachse. Insbesondere kann vorgesehen sein, dass das Arretierungsglied zwischen den beiden Lagerzapfenaufnahmen in axialer Richtung bezogen auf die Schwenkachse unverschieblich gehalten ist.

Wie eingangs erwähnt, kann in das mindestens eine Batterieaufnahmefach des Elektrogeräts eine Batterie, insbesondere eine wiederaufladbare Batterie, eingesetzt werden, und mittels der Arretierungseinrichtung kann die Batterie im Batterieaufnahmefach arretiert werden. Ein am Arretierungsglied angeordnetes Arretierungselement wirkt hierbei mit einem komplementär ausgestalteten Arretierungselement der Batterie zusammen. Insbesondere kann vorgesehen sein, dass das Arretierungselement des Arretierungsglieds einen Vorsprung ausbildet, der in eine komplementär ausgestaltete Ausnehmung der Batterie eintauchen kann, wenn das Arretierungsglied seine Arretierungsstellung einnimmt.

Von Vorteil ist es, wenn das Arretierungselement in der Arretierungsstellung des Arretierungsglieds eine Durchbrechung einer das zugeordnete Batterieaufnahmefach begrenzenden Zwischenwand durchgreift und zumindest in der Freigabestellung des Arretierungsglieds ein Flächenabschnitt einer der Schwenkachse des Arretierungsglieds abgewandten Endfläche des Arretierungselements an einem Randabschnitt der Durchbrechung angeordnet ist. In der Arretierungsstellung durchgreift das Arretierungselement die Durchbrechung der Zwischenwand, die das Batterieaufnahmefach begrenzt, und kann mit einem komplementär ausgestalteten Arretierungselement der Batterie zusammenwirken. Nimmt das Arretierungsglied seine Freigabestellung ein, so gibt das Arretierungselement das Batterieaufnahmefach zwar frei, ein Flächenabschnitt einer der Schwenkachse des Arretierungsglieds abgewandten Endfläche des Arretierungselements nimmt dann aber eine Position an einem Randabschnitt der Durchbrechung ein. Mittels des Arretierungselements stützt sich somit das Arretierungsglied zumindest in der Freigabestellung am Randabschnitt der Durchbrechung ab.

Von besonderem Vorteil ist es, wenn eine der Schwenkachse des Arretierungsglieds abgewandte Endfläche des Arretierungselements einen ersten Flächenabschnitt und einen zweiten Flächenabschnitt aufweist, wobei der erste Flächenabschnitt in der Freigabestellung des Arretierungsglieds an einem Randabschnitt der Durchbrechung der Zwischenwand angeordnet ist, und wobei der zweite Flächenabschnitt in der Arretierungsstellung des Arretierungsglieds am Randabschnitt der Durchbrechung angeordnet ist. Bei einer derartigen Ausgestaltung stützt sich somit das Arretierungsglied sowohl in der Arretierungsstellung als auch in der Freigabestellung an einem Randabschnitt der Durchbrechung der Zwischenwand ab. Dadurch kann das Arretierungsglied mit seinen Lagerzapfen besonders zuverlässig in den zugeordneten Lagerzapfenaufnahmen und im Lagerring gehalten werden.

Von Vorteil ist es, wenn dem Arretierungsglied ein Betätigungselement zugeordnet ist und das Arretierungsglied durch manuelles Betätigen des Betätigungselements entgegen der Federkraft des Federelements aus der Arretierungsstellung in die Freigabestellung bewegbar ist.

Das Betätigungselement bildet günstigerweise einen Druckknopf aus. Hierbei ist es von Vorteil, wenn die Betätigungsrichtung des Druckknopfs parallel zur Einführrichtung der Batterie beim Einsetzen in das Batteriefach ausgerichtet ist. Dies erleichtert die Handhabung des Elektrogeräts beim Einsetzen und Entnehmen der Batterie.

Günstig ist es, wenn das Betätigungselement einen Druckknopf ausbildet. Der Druckknopf kann vom Benutzer zum Freigeben einer Batterie betätigt werden.

Günstig ist es, wenn das Bestätigungselement einen Mitnehmer aufweist, der beim Betätigen des Betätigungselements an einer Gleitfläche des Arretierungsglieds entlanggleitet.

Von besonderem Vorteil ist es, wenn in dem mindestens einen Batterieaufnahmefach ein Schubteil angeordnet ist, wobei die in das jeweilige Batterieaufnahmefach eingesetzte Batterie nach Betätigen des Betätigungselements vom Schubteil in eine Entnahmestellung bewegbar ist.

Die nachfolgende Beschreibung einer vorteilhaften Ausführungsform der Erfindung dient im Zusammenhang mit der Zeichnung der näheren Erläuterung. Es zeigen:

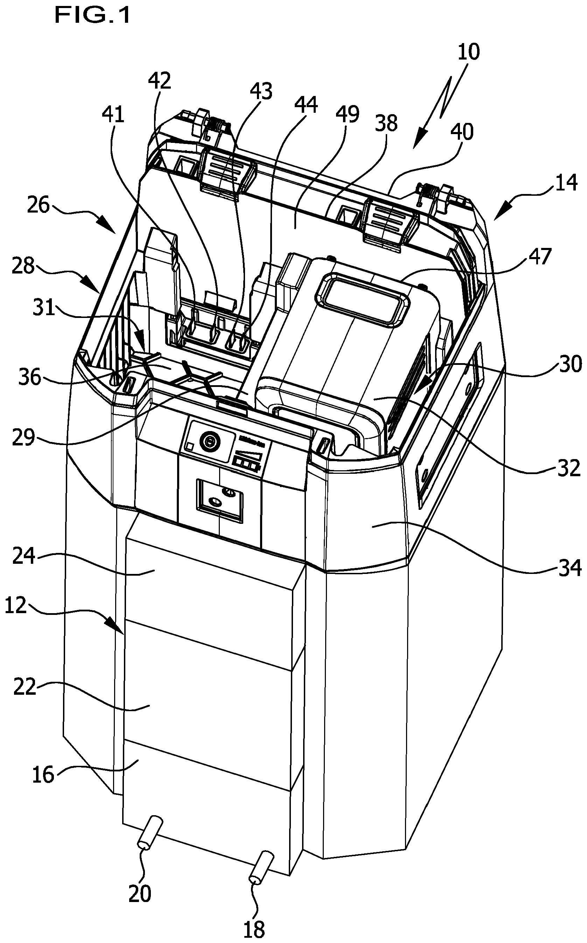

- Figur 1:: eine perspektivische Darstellung eines Elektrogeräts mit einer Batterieaufnahmeeinrichtung, wobei ein Deckel der Batterieaufnahmeeinrichtung ausgeblendet ist;

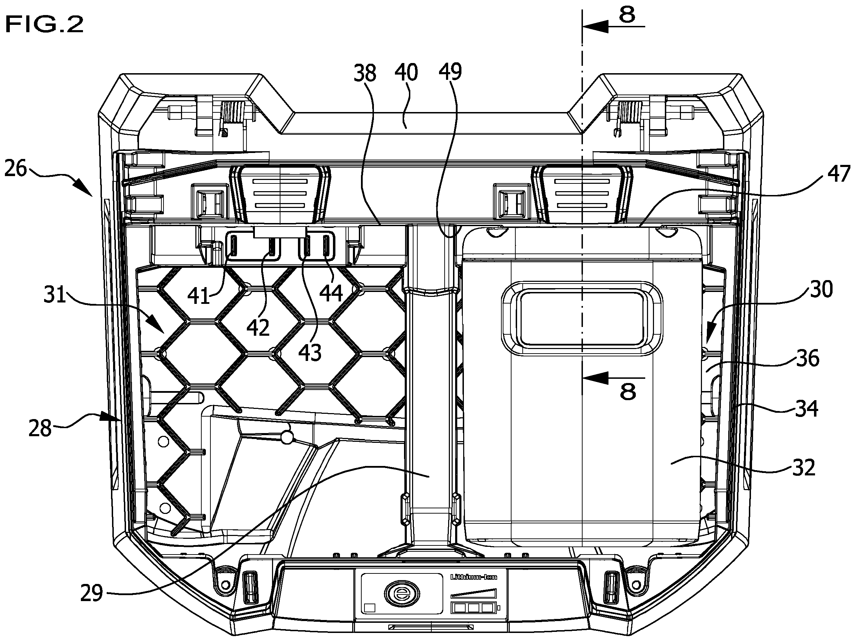

- Figur 2:: eine Draufsicht auf die Batterieaufnahmeeinrichtung aus Figur 1;
- Figur 3:: eine perspektivische Darstellung der Batterieaufnahmeeinrichtung aus Figur 1, wobei ein rückwärtiger Gehäuseabschnitt eines Aufnahmegehäuses der Batterieaufnahmeeinrichtung ausgeblendet ist;
- Figur 4:: eine perspektivische Darstellung der Batterieaufnahmeeinrichtung entsprechend Figur 3, wobei ein erstes Arretierungsglied ausgeblendet ist;
- Figur 5:: eine vergrößerte Darstellung von Detail X aus Figur 4;
- Figur 6:: eine schematische Darstellung einer ersten Arretierungseinrichtung;
- Figur 7:: eine perspektivische Darstellung der Arretierungseinrichtung aus Figur 6 nach Art einer Explosionsdarstellung;
- Figur 8:: eine Schnittansicht längs der Linie 8-8 in Figur 2, wobei eine Batterie vollständig in ein Batterieaufnahmefach eingesetzt ist und ein Arretierungsglied eine Arretierungsstellung einnimmt;
- Figur 9:: eine Schnittansicht entsprechend Figur 8, wobei die Batterie eine Entnahmestellung und das Arretierungsglied eine Freigabestellung einnimmt.

In der Zeichnung ist eine vorteilhafte Ausgestaltung eines erfindungsgemäßen Elektrogeräts 10 schematisch dargestellt, das eine Elektroeinrichtung 12 aufweist. Im dargestellten Ausführungsbeispiel ist das Elektrogerät 10 in Form eines Hochdruckreinigungsgeräts 14 ausgestaltet, das eine Pumpe 16 mit einem Pumpeneinlass 18 und einem Pumpenauslass 20 aufweist. Die Elektroeinrichtung 10 bildet im dargestellten Ausführungsbeispiel einen Elektromotor 22 und eine Gerätesteuerung 24 aus. Mit Hilfe des Elektromotors 22 wird die Pumpe 16 angetrieben, und die Gerätesteuerung 24 steuert den Elektromotor 22. An den Pumpeneinlass 18 kann ein an sich bekannter und deshalb in der Zeichnung zur Erzielung einer besseren Übersicht nicht dargestellter Versorgungsschlauch angeschlossen werden, über den der Pumpe 16 unter Druck zu setzende Reinigungsflüssigkeit zugeführt werden kann. An den Pumpenauslass 20 kann ein in der Zeichnung zur Erzielung einer besseren Übersicht ebenfalls nicht dargestellter Hochdruckschlauch angeschlossen werden, über den von der Pumpe 16 unter Druck gesetzte Reinigungsflüssigkeit abgegeben werden kann.

Das Hochdruckreinigungsgerät 14 weist eine Batterieaufnahmeeinrichtung 26 auf mit einem Aufnahmegehäuse 28, das ein erstes Batterieaufnahmefach 30 und ein zweites Batterieaufnahmefach 32 umgibt, die mittels einer Trennwand 29 voneinander getrennt sind. Die Batterieaufnahmefächer 30, 31 sind identisch ausgestaltet. In jedes Batterieaufnahmefach 30, 31 kann eine wiederaufladbare Batterie eingesetzt werden, wobei in der Zeichnung zur Erzielung einer besseren Übersicht nur in das erste Batterieaufnahmefach 30 eine Batterie 32 eingesetzt ist. Oberseitig kann das Aufnahmegehäuse 28 mittels eines Deckels geschlossen werden. Der Deckel ist in der Zeichnung ausgeblendet.

Das Aufnahmegehäuse 28 weist eine umlaufende Außenwand 34 auf sowie eine Bodenwand 36 und eine senkrecht zur Trennwand 29 ausgerichtete Zwischenwand 38, die sich zwischen einem rückwärtigen Wandabschnitt 40 der umlaufenden Außenwand 34 und den Batterieaufnahmefächern 30, 31 erstreckt und die Batterieaufnahmefächer 30, 31 in Richtung des rückwärtigen Wandabschnitts begrenzt.

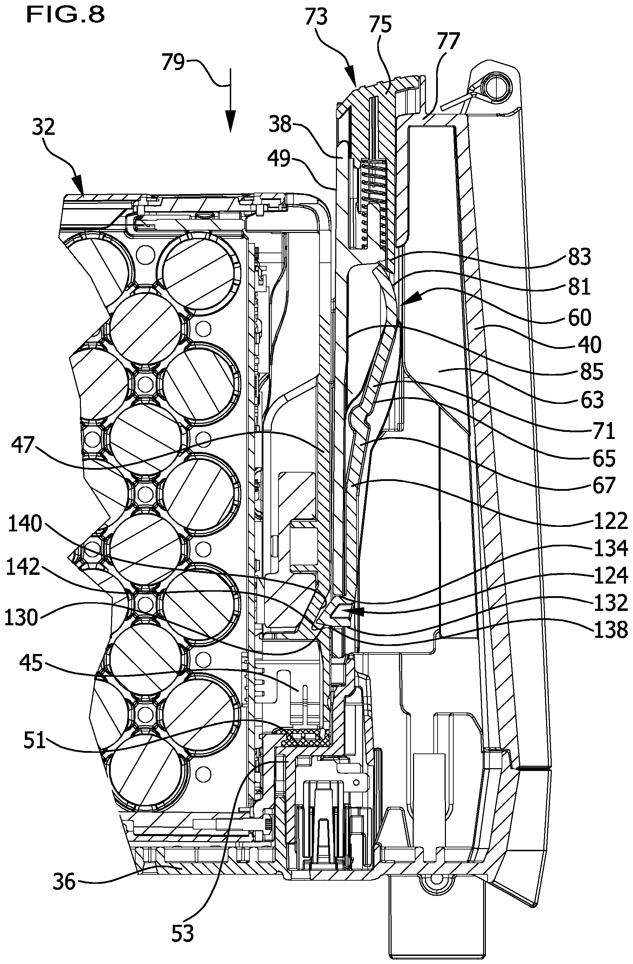

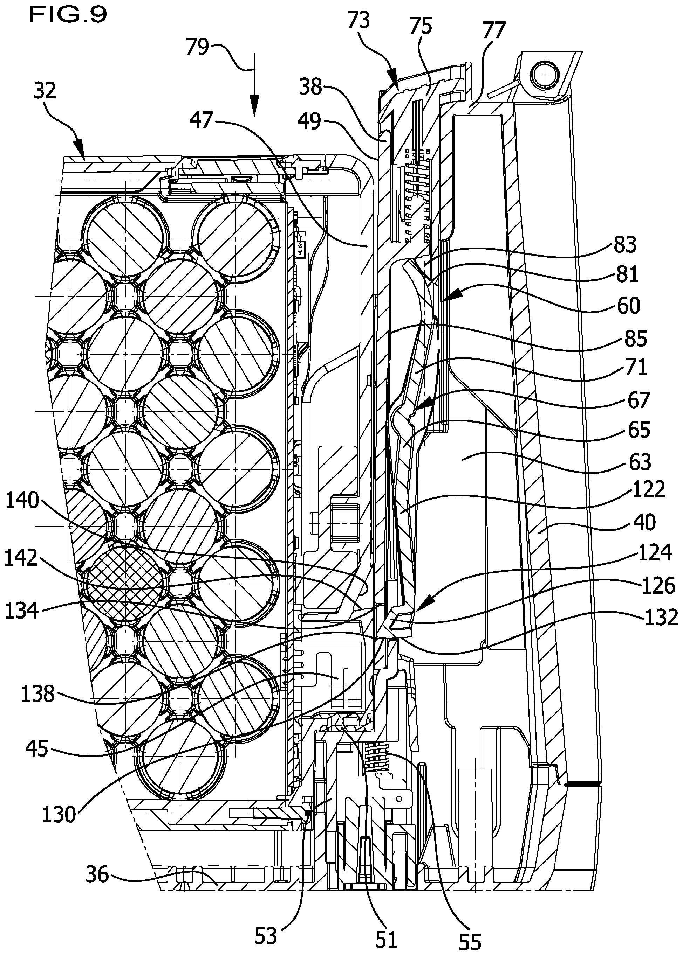

In den Batterieaufnahmefächern 30, 31 sind der Zwischenwand 38 unmittelbar benachbart jeweils vier elektrische Kontaktelemente 41, 42, 43, 44 angeordnet, die von korrespondierenden elektrischen Anschlusselementen der jeweils in das Batterieaufnahmefach 30, 31 eingesetzten Batterie kontaktiert werden können. Beispielhaft ist in den Figuren 8 und 9 ein elektrisches Anschlusselement 45 der Batterie 32 schematisch dargestellt.

Die Batterien 32 weisen jeweils eine Batterierückwand 47 auf, die an einer einem Batterieaufnahmefach 30, 31 zugewandten Vorderseite 49 der Zwischenwand 38 entlanggleiten kann, bis ein Wandabschnitt 51 der Batterierückwand 47 an einem federelastisch vorgespannten Schubteil 53 zur Anlage gelangt, das beim weiteren Einsetzen der Batterie 32 relativ zu den elektrischen Kontaktelementen 41, 42, 43, 44 entgegen der Federkraft einer Druckfeder 55 in Richtung auf die Bodenwand 36 bewegt werden kann. Dies wird insbesondere aus den Figuren 8 und 9 deutlich.

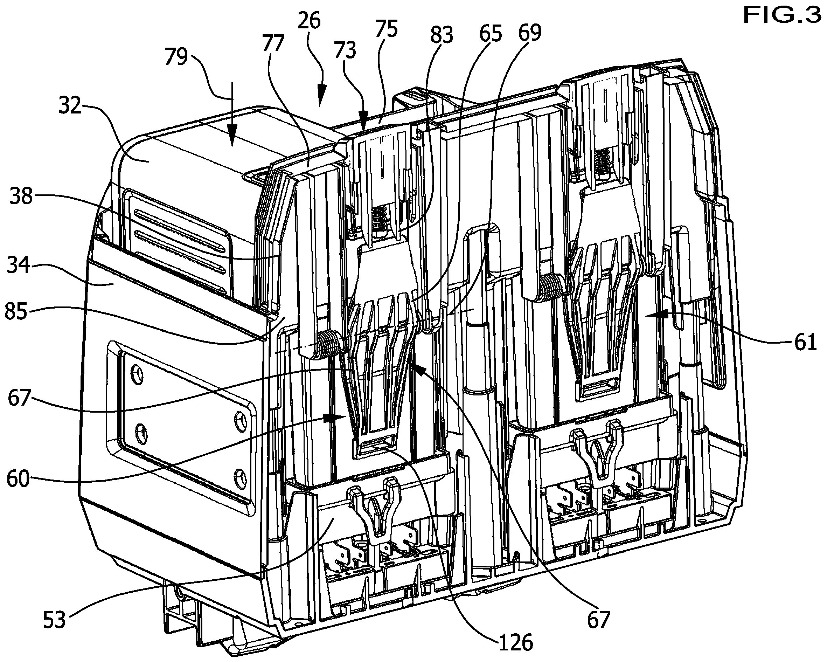

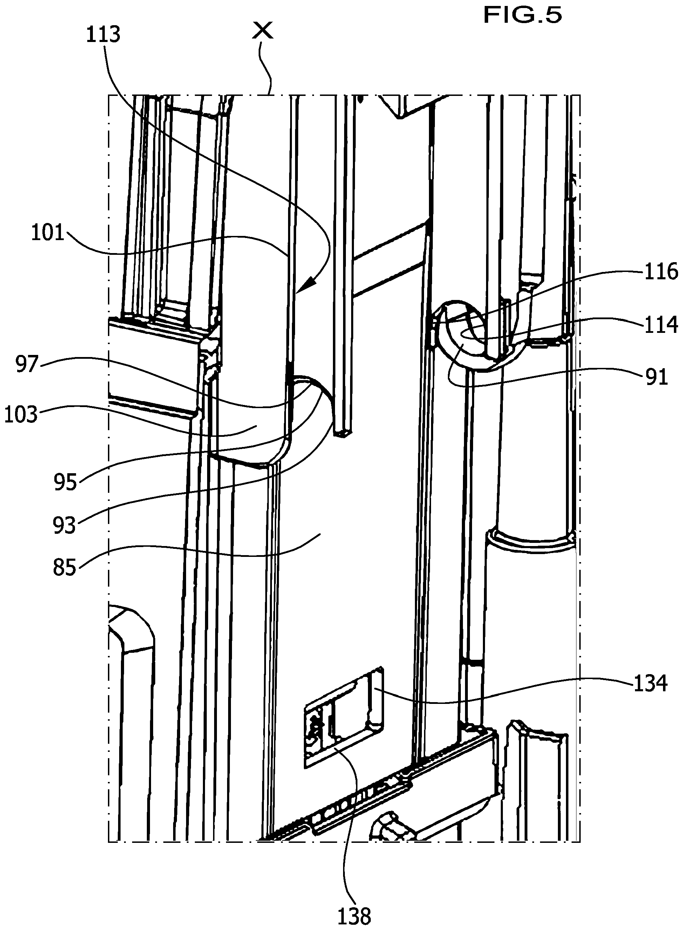

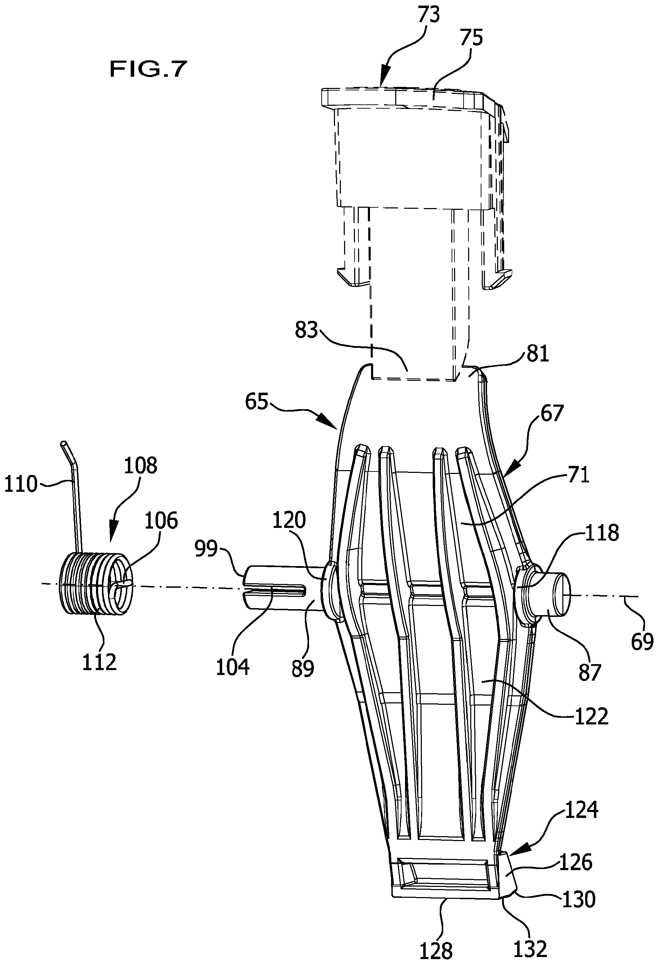

Zum Arretieren der in die Batterieaufnahmefächer 30, 31 eingesetzten Batterien weist das Elektrogerät 10 zwei identisch ausgestaltete Arretierungseinrichtungen 60, 61 auf. Die Arretierungseinrichtung 60 ist dem ersten Batterieaufnahmefach 30 zugeordnet, und die Arretierungseinrichtung 61 ist dem zweiten Batterieaufnahmefach 31 zugeordnet. Unter Bezugnahme auf die Figuren 3 bis 9 wird nachfolgend die Arretierungseinrichtung 60 im Einzelnen beschrieben. Die entsprechenden Ausführungen treffen in gleicher Weise auch auf die Arretierungseinrichtung 61 zu.

Die Arretierungseinrichtung 60 und die Arretierungseinrichtung 61 sind in einem Arretierungsaufnahmeraum 63 angeordnet, der sich zwischen der Zwischenwand 38 und dem rückwärtigen Wandabschnitt 40 der Außenwand 34 des Aufnahmegehäuses 28 erstreckt.

Die Arretierungseinrichtung 60 weist ein Arretierungsglied 65 auf, das in Form eines zweiarmigen Arretierungshebels 67 ausgestaltet ist und das um eine Schwenkachse 69 zwischen einer in Figur 8 dargestellten Arretierungsstellung und einer in Figur 9 dargestellten Freigabestellung hin und her verschwenkbar ist. Ein erster Hebelarm 71 des Arretierungshebels 67 erstreckt sich von der Schwenkachse 69 bis zu einem Betätigungselement 73, das in Form eines Druckknopfs 75 ausgestaltet ist, der an einer Deckenwand 77 des Arretierungsaufnahmeraums 63 parallel zu einer Einsetzrichtung der Batterie 32 verschiebbar gelagert ist. Die Einsetzeinrichtung ist in den Figuren 3, 4, 8 und 9 durch den Pfeil 79 schematisch dargestellt.

An seinem freien Endbereich weist der erste Hebelarm 71 eine bogenförmige Gleitfläche 81 auf, die an einem Mitnehmer 83 des Druckknopfs 75 zur Anlage gelangt. Wird der Druckknopf 75 parallel zur Einsetzrichtung 79 in die Deckenwand 77 eingedrückt, so gleitet der Mitnehmer 83 an der Gleitfläche 81 entlang und der Arretierungshebel 67 wird um die Schwenkachse 69 in die Freigabestellung verschwenkt.

Der Arretierungshebel 67 ist an der dem Arretierungsaufnahmeraum 63 zugewandten Rückseite 85 der Zwischenwand 38 schwenkbar gelagert. Der Arretierungshebel 67 weist hierzu einen ersten Lagerzapfen 87 und einen zweiten Lagerzapfen 89 auf, die einander abgewandt und koaxial zur Schwenkachse 69 ausgerichtet sind. Der erste Lagerzapfen 87 taucht in einen an der Rückseite 85 der Zwischenwand 38 angeordneten Lagerring 91 ein, der den ersten Lagerzapfen 87 in Umfangsrichtung vollständig umgibt. Der zweite Lagerzapfen 89 durchgreift eine erste Lagerzapfenaufnahme 93, die eine erste Lagergabel 95 ausbildet. Die erste Lagerzapfenaufnahme 93 bildet einen Halbring 97 aus, der den zweiten Lagerzapfen 89 in Umfangsrichtung über einen Winkelbereich von 180° umgibt und in den der zweite Lagerzapfen 89 entgegen der Einsetzrichtung 79 eingesetzt werden kann.

Eine freie Stirnseite 99 des zweiten Lagerzapfens 89 liegt an einem Wandvorsprung 101 an, der von der Rückseite 85 der Zwischenwand 38 senkrecht absteht und in Form einer elastisch verformbaren Stützrippe 103 ausgestaltet ist.

Der zweite Lagerzapfen 89 weist einen koaxial zur Schwenkachse 69 ausgerichteten Längsschlitz 104 auf, der in die freie Stirnseite 99 des zweiten Lagerzapfens 89 einmündet.

Der Längsschlitz 104 wird von einem ersten Schenkel 106 einer Schenkelfeder 108 durchgriffen, deren zweiter Schenkel 110 im Wesentlichen senkrecht zur Schwenkachse 69 von einem Federabschnitt 112 der Schenkelfeder 108 absteht, der den zweiten Lagerzapfen 89 schraubenlinienförmig umgibt und sich zwischen den beiden Schenkeln 106, 110 erstreckt.

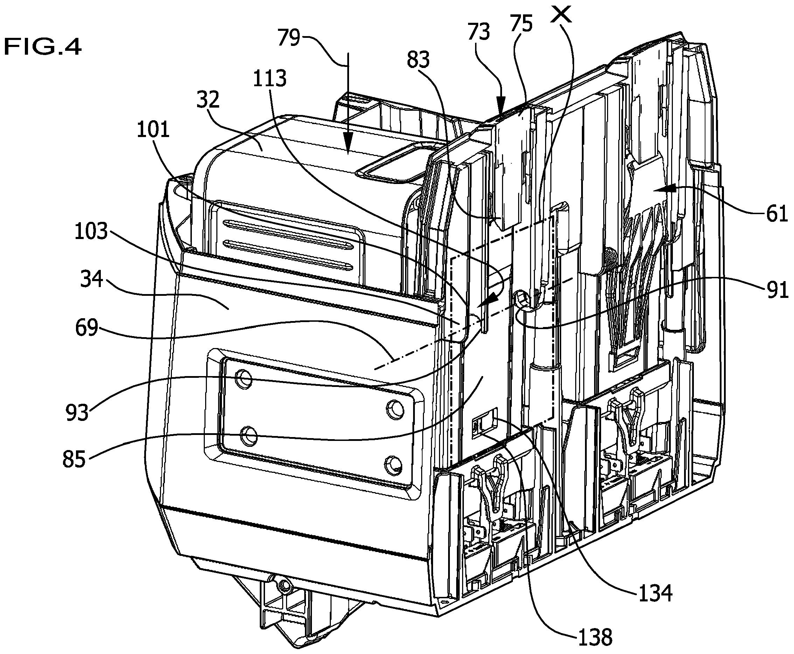

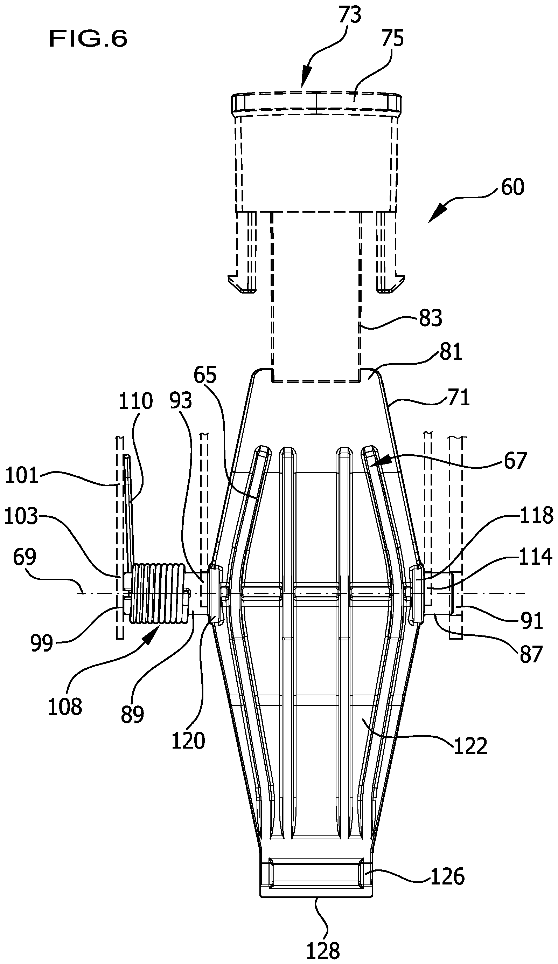

Wie insbesondere aus den Figuren 4 und 6 deutlich wird, liegt der zweite Schenkel 110 der Schenkelfeder 108 an einer Stützeinrichtung 113 an, die von der Rückseite 85 der Zwischenwand 38 und der Stützrippe 103 gebildet wird. Der zweite Schenkel 110 ist geringfügig zur Stützrippe 103 geneigt und übt dadurch eine Federkraft in axialer Richtung auf den zweiten Lagerzapfen 89 aus.

Im Abstand zum Lagerring 91 ist an der Rückseite 85 der Zwischenwand 38 eine zweite Lagerzapfenaufnahme 114 gehalten, die eine zweite Lagergabel 116 ausbildet und den ersten Lagerzapfen 87 in Umfangsrichtung über einen Winkelbereich von 180° umgibt. Der erste Lagerzapfen 87 kann entgegen der Einsetzrichtung 79 in die zweite Lagergabel 116 eingesetzt werden.

Der erste Lagerzapfen 87 weist eine radiale Erweiterung auf, die ein erstes Anschlagelement 118 ausbildet, und der zweite Lagerzapfen 89 weist eine zweite radiale Erweiterung auf, die ein zweites Anschlagelement 120 ausbildet. Die Anschlagelemente 118, 120 liegen an den einander zugewandten Seiten der Lagerzapfenaufnahmen 93, 114 an, so dass der Arretierungshebel 67 zwischen den beiden Lagerzapfenaufnahmen 93, 114 bezogen auf die Schwenkachse 69 in axialer Richtung unbeweglich gehalten ist.

Ein zweiter Hebelarm 122 des Arretierungshebels 67 erstreckt sich von der Schwenkachse 69 in die dem ersten Hebelarm 71 abgewandte Richtung und trägt an seinem freien Ende ein Arretierungselement 124, das einen Rastvorsprung 126 ausbildet und an seiner der Schwenkachse 69 abgewandten freien Endfläche 128 einen ersten Flächenabschnitt 130 und einen zweiten Flächenabschnitt 132 aufweist.

Die Zwischenwand 38 weist zwei identisch ausgestaltete, im dargestellten Ausführungsbeispiel rechteckförmige Durchbrechungen 134 auf, die jeweils einem Batterieaufnahmefach 30, 31 zugeordnet sind. Die dem ersten Batterieaufnahmefach 30 zugeordnete Durchbrechung 134 wird in der Arretierungsstellung des Arretierungshebels 67 vom Rastvorsprung 126 durchgriffen, der in dieser Stellung in das erste Batterieaufnahmefach 30 hineinragt. Hierbei ragt auch der erste Flächenabschnitt 130 der Endfläche 128 des Rastvorsprungs 126 in das Batterieaufnahmefach hinein, wohingegen der zweite Flächenabschnitt 132 der Endfläche 128 an einem Randabschnitt 138 der Durchbrechung 134 anliegt. Dies wird insbesondere aus Figur 8 deutlich. Nimmt der Arretierungshebel 67 seine Freigabestellung ein, so gibt der Rastvorsprung 126 das erste Batterieaufnahmefach 30 frei, wobei der erste Flächenabschnitt 130 des Rastvorsprungs 126 am Randabschnitt 138 der Durchbrechung 134 zur Anlage gelangt, wohingegen der zweite Flächenabschnitt 132 in den Arretierungsaufnahmeraum 63 hineinragt. Dies wird insbesondere aus Figur 9 deutlich. Der Arretierungshebel 67 wird somit sowohl in der Arretierungsstellung als auch in seiner Freigabestellung vom Randabschnitt 138 der Durchbrechung 134 abgestützt.

Die Batterierückwand 47 der Batterie 32 weist ein komplementär zum Arretierungselement 124 ausgestaltetes Arretierungselement 140 auf, das in Form einer komplementär zum Rastvorsprung 126 ausgestalteten Rastausnehmung 142 ausgebildet ist.

Wie erwähnt, kann die Batterie 32 in das erste Batterieaufnahmefach 30 eingesetzt werden. Erreicht die Batterie 32 ihre in Figur 8 dargestellte Endstellung, so trifft die Rastausnehmung 142 der Batterie 32 auf die Durchbrechung 134 und der Rastvorsprung 126 des Arretierungshebels 67 taucht in die Rastausnehmung 142 ein. Zu diesem Zweck übt die Schenkelfeder 108 eine Federkraft auf den Arretierungshebel 67 aus, unter deren Wirkung der Arretierungshebel 67 in Richtung auf die Arretierungsstellung vorgespannt ist.

Nach dem Eintauchen des Rastvorsprungs 126 in die Rastausnehmung 142 kann die Batterie 32 nicht ohne Weiteres dem ersten Batterieaufnahmefach 30 entnommen werden. Soll die Batterie 32 dem ersten Batterieaufnahmefach 30 entnommen werden, so betätigt der Benutzer hierzu das Betätigungselement 73 in Form des Druckknopfs 75, so dass der Arretierungshebel 67 entgegen der Federkraft der Schenkelfeder 108 aus der in Figur 8 dargestellten Arretierungsstellung in die in Figur 9 dargestellte Freigabestellung verschwenkt wird. Der Rastvorsprung 126 gibt hierbei das erste Batterieaufnahmefach 30 vollständig frei und die Batterie 32 wird von der auf das Schubteil 53 des ersten Batterieaufnahmefachs 30 einwirkenden Druckfeder 55 in eine in Figur 9 dargestellte Entnahmestellung bewegt, aus der sie vom Benutzer auf einfache Weise entnommen werden kann.

Die Montage des Arretierungshebels 67 an der Rückseite 85 der Zwischenwand 38 gestaltet sich sehr einfach. Hierzu ist es lediglich erforderlich, die beiden Lagerzapfen 87, 89 zunächst schräg zu den Lagerzapfenaufnahmen 93, 114 auszurichten und den ersten Lagerzapfen 87 in den Lagerring 91 einzuführen. Anschließend kann der Arretierungshebel 67 so weit verschwenkt werden, dass die Lagerzapfen 87, 89 von den zugeordneten Lagerzapfenaufnahmen 93, 114 aufgenommen werden und die freie Stirnseite 99 des zweiten Lagerzapfens 89 an der Stützrippe 103 zur Anlage gelangt, wobei die Schenkelfeder 108 den Arretierungshebel 67 in seine Arretierungsstellung drückt, in der der erste Flächenabschnitt 130 der Endfläche 128 des Rastvorsprungs 126 in das Batterieaufnahmefach 30 hinreinragt und der zweite Flächenabschnitt 132 der Endfläche 128 des Rastvorsprungs 126 am Randabschnitt 138 der Durchbrechung 134 zur Anlage gelangt.

## Patentansprüche

1. Elektrogerät mit einer Elektroeinrichtung (12) und mit mindestens einem Batterieaufnahmefach (30, 31), in das eine Batterie (32) einsetzbar ist und dem eine Arretierungseinrichtung (60) zugeordnet ist zum Arretieren der Batterie (32) im Batterieaufnahmefach (30), wobei die Arretierungseinrichtung (60) ein Arretierungsglied (65) aufweist, das um eine Schwenkachse (69) zwischen einer Arretierungsstellung und einer Freigabestellung hin und her verschwenkbar ist und das ein Arretierungselement (124) aufweist, das in der Arretierungsstellung in das Batterieaufnahmefach (30) hineinragt und in der Freigabestellung das Batterieaufnahmefach (30) freigibt, wobei das Arretierungsglied (65) mittels eines Federelements (108) in die Arretierungsstellung vorgespannt ist, **dadurch gekennzeichnet, dass** das Arretierungsglied (65) einen ersten Lagerzapfen (87) und einen zweiten Lagerzapfen (89) aufweist, die einander abgewandt und koaxial zur Schwenkachse (69) ausgerichtet sind, wobei der erste Lagerzapfen (87) in einen Lagerring (91) eintaucht, der den ersten Lagerzapfen (87) in Umfangsrichtung umgibt, und wobei der zweite Lagerzapfen (89) eine erste Lagerzapfenaufnahme (93) durchgreift, die den zweiten Lagerzapfen (89) in Umfangsrichtung teilweise umgibt.

2. Elektrogerät nach Anspruch 1, **dadurch gekennzeichnet, dass** die erste Lagerzapfenaufnahme (93) eine erste Lagergabel (95) ausbildet.

3. Elektrogerät nach Anspruch 1 oder 2, **dadurch gekennzeichnet, dass** das Arretierungsglied (65) einen zweiarmigen Arretierungshebel (67) ausbildet.

4. Elektrogerät nach einem der Ansprüche 1 bis 3, **dadurch gekennzeichnet, dass** das Federelement eine Schenkelfeder (108) ausbildet mit einem den zweiten Lagerzapfen (89) schraubenlinienförmig umgebenden Federabschnitt (112), von dem ein erster Schenkel (106) und ein zweiter Schenkel (110) abstehen, wobei der erste Schenkel (106) am zweiten Lagerzapfen (89) gehalten ist und der zweite Schenkel (110) an einer Stützeinrichtung (113) anliegt, wobei der zweite Lagerzapfen (89) bevorzugt eine Ausnehmung (104) aufweist, die den ersten Schenkel (106) aufnimmt, wobei die Ausnehmung (104) bevorzugt schlitzförmig ausgestaltet ist.

5. Elektrogerät nach Anspruch 4, **dadurch gekennzeichnet, dass** das mindestens eine Batterieaufnahmefach (30, 31) mittels einer Zwischenwand (38) von einem Arretierungsaufnahmeraum (63) getrennt ist, in dem die dem Batterieaufnahmefach (30, 31) zugeordnete Arretierungseinrichtung (60, 61) angeordnet ist, wobei die Stützeinrichtung (113) von der dem Arretierungsraum (63) zugewandten Rückseite (85) der Zwischenwand (38) und einem Wandvorsprung (101) der Zwischenwand (38) ausgebildet wird, vorzugsweise dass der zweite Lagerzapfen (89) eine freie Stirnseite (99) aufweist, die dem Wandvorsprung (101) gegenüberliegt.

6. Elektrogerät nach Anspruch 5, **dadurch gekennzeichnet, dass** der Wandvorsprung (101) eine Stützrippe (103) ausbildet, die von der Zwischenwand (38) in den Arretierungsaufnahmeraum (63) hineinragt, wobei die Stützrippe (103) vorzugsweise elastisch verformbar ist, wobei die freie Stirnseite (99) des zweiten Lagerzapfens (89) bevorzugt an der Stützrippe (103) anliegt.

7. Elektrogerät nach einem der voranstehenden Ansprüche, **dadurch gekennzeichnet, dass** die Arretierungseinrichtung (60) eine zweite Lagerzapfenaufnahme (114) aufweist, die den ersten Lagerzapfen (87) in Umfangsrichtung teilweise umgibt, wobei die zweite Lagerzapfenaufnahme (114) bevorzugt eine zweite Lagergabel (116) ausbildet.

8. Elektrogerät nach Anspruch 7, **dadurch gekennzeichnet, dass** der Arretierungshebel (67) zwei Anschlagelemente (118, 120) aufweist, die an den einander zugewandten Seiten der beiden Lagerzapfenaufnahmen (93, 114) anliegen.

9. Elektrogerät nach einem der voranstehenden Ansprüche, **dadurch gekennzeichnet, dass** das Arretierungselement (124) in der Arretierungsstellung des Arretierungsglieds (65) eine Durchbrechung (134) einer das zugeordnete Batterieaufnahmefach (30) begrenzenden Zwischenwand (38) durchgreift, wobei zumindest in der Freigabestellung des Arretierungsglieds (65) ein Flächenabschnitt (130) einer der Schwenkachse (69) des Arretierungsglieds (65) abgewandten Endfläche (128) des Arretierungselements (124) an einem Randabschnitt (138) der Durchbrechung (134) angeordnet ist.

10. Elektrogerät nach Anspruch 9, **dadurch gekennzeichnet, dass** die der Schwenkachse (69) des Arretierungsglieds (65) abgewandte Endfläche (128) des Arretierungselements (118) einen ersten Flächenabschnitt (130) und einen zweiten Flächenabschnitt (132) aufweist, wobei der erste Flächenabschnitt (130) in der Freigabestellung des Arretierungsglieds (65) am Randabschnitt (138) der Durchbrechung (134) angeordnet ist, und wobei der zweite Flächenabschnitt (132) in der Arretierungsstellung des Arretierungsglieds (65) am Randabschnitt (138) der Durchbrechung (134) angeordnet ist.

11. Elektrogerät nach einem der voranstehenden Ansprüche, **dadurch gekennzeichnet, dass** dem Arretierungsglied (65) ein Betätigungselement (73) zugeordnet ist und das Arretierungsglied (65) durch manuelles Betätigen des Betätigungselements (73) entgegen der Federkraft des Federelements (108) aus der Arretierungsstellung in die Freigabestellung bewegbar ist.

12. Elektrogerät nach Anspruch 11, **dadurch gekennzeichnet, dass** das Betätigungselement (73) einen Druckknopf (75) ausbildet.

13. Elektrogerät nach Anspruch 11 oder 12, **dadurch gekennzeichnet, dass** das Betätigungselement (73) einen Mitnehmer (83) aufweist, der beim Betätigen des Betätigungselements (73) an einer Gleitfläche (81) des Arretierungsglieds (65) entlanggleitet.

14. Elektrogerät nach Anspruch 11, 12 oder 13, **dadurch gekennzeichnet, dass** in dem mindestens einen Batterieaufnahmefach (30, 31) ein Schubteil (53) angeordnet ist, wobei die in das jeweilige Batterieaufnahmefach (30, 31) eingesetzte Batterie (32) nach Betätigen des Betätigungselements (73) vom Schubteil (53) in eine Entnahmestellung bewegbar ist.

## Claims

1. Electrical appliance comprising an electrical device (12) and comprising at least one battery receiving compartment (30, 31) into which a battery (32) is insertable and to which is associated a locking device (60) for locking the battery (32) in the battery receiving compartment (30), wherein the locking device (60) comprises a locking member (65), which is pivotable about a pivot axis (69) back and forth between a locking position and a release position and which comprises a locking element (124), which in the locking position projects into the battery receiving compartment (30) and in the release position unblocks the battery receiving compartment (30), wherein the locking member (65) is biased into the locking position by means of a spring element (108), **characterized in that** the locking member (65) comprises a first bearing pin (87) and a second bearing pin (89), which point away from one another and are oriented coaxially to the pivot axis (69), wherein the first bearing pin (87) dips into a bearing ring (91), which surrounds the first bearing pin (87) in the circumferential direction, and wherein the second bearing pin (89) passes through a first bearing pin receptacle (93), which partially surrounds the second bearing pin (89) in the circumferential direction.

2. Electrical appliance in accordance with Claim 1, **characterized in that** the first bearing pin receptacle (92) forms a first bearing fork (95).

3. Electrical appliance in accordance with Claim 1 or 2, **characterized in that** the locking member (65) forms a two-armed locking lever (67).

4. Electrical appliance in accordance with any one of Claims 1 to 3, **characterized in that** the spring element forms a leg spring (108) with a spring portion (112) helically surrounding the second bearing pin (89), from which spring portion a first leg (106) and a second leg (110) project, wherein the first leg (106) is held on the second bearing pin (89) and the second leg (110) abuts against a support device (113), wherein the second bearing pin (89) preferably has a recess (104), which accommodates the first leg (106), wherein the recess (104) is preferably of slit-shaped configuration.

5. Electrical appliance in accordance with Claim 4, **characterized in that** the at least one battery receiving compartment (30, 31) is separated from a locking mechanism receiving space (63) by means of an intermediate wall (38), in which locking mechanism receiving space the locking device (60, 61) associated with the battery receiving compartment (30, 31) is arranged, wherein the support device (113) is formed by the rear side (85) of the intermediate wall (38) facing toward the locking mechanism space (63) and by a wall projection (101) of the intermediate wall (38), preferably **in that** the second bearing pin (89) has a free face side (99), which is located opposite the wall projection (101).

6. Electrical appliance in accordance with Claim 5, **characterized in that** the wall projection (101) forms a support rib (103), which projects from the intermediate wall (38) into the locking mechanism receiving space (63), wherein the support rib (103) is preferably elastically deformable, wherein the free face side (99) of the second bearing pin (89) preferably abuts against the support rib (103).

7. Electrical appliance in accordance with any one of the preceding Claims, **characterized in that** the locking device (60) comprises a second bearing pin receptacle (114), which partially surrounds the first bearing pin (87) in the circumferential direction, wherein the second bearing pin receptacle (114) preferably forms a second bearing fork (116).

8. Electrical appliance in accordance with Claim 7, **characterized in that** the locking lever (67) comprises two stop elements (118, 120), which abut against the sides of the two bearing pin receptacles (93, 114) facing one another.

9. Electrical appliance in accordance with any one of the preceding Claims, **characterized in that** the locking element (124) in the locking position of the locking member (65) passes through a perforation (134) of an intermediate wall (38) delimiting the associated battery receiving compartment (30), wherein at least in the release position of the locking member (65), a surface portion (130) of an end face (128) of the locking element (124) pointing away from the pivot axis (69) of the locking member (65) is arranged at a rim portion (138) of the perforation (134).

10. Electrical appliance in accordance with Claim 9, **characterized in that** the end face (128) of the locking element (118) pointing away from the pivot axis (69) of the locking member (65) comprises a first surface portion (130) and a second surface portion (132), wherein the first surface portion (130) in the release position of the locking member (65) is arranged at the rim portion (138) of the perforation (134), and wherein the second surface portion (132) in the locking position of the locking member (65) is arranged at the rim portion (138) of the perforation (134).

11. Electrical appliance in accordance with any one of the preceding Claims, **characterized in that** an actuating element (73) is associated with the locking member (65) and the locking member (65) is movable from the locking position into the release position against the spring force of the spring element (108) by manually actuating the actuating element (73).

12. Electrical appliance in accordance with Claim 11, **characterized in that** the actuating element (73) forms a push-button (75).

13. Electrical appliance in accordance with Claim 11 or 12, **characterized in that** the actuating element (73) comprises a driver (83), which slides along a sliding face (81) of the locking member (65) when actuating the actuating element (73).

14. Electrical appliance in accordance with Claim 11, 12, or 13, **characterized in that** a pushing part (53) is arranged in the at least one battery receiving compartment (30, 31), wherein the battery (32) inserted into the respective battery receiving compartment (30, 31) is movable into a removal position by the pushing part (53) after actuating the actuating element (73).

## Revendications

1. Appareil électrique comprenant un dispositif électrique (12) et au moins un compartiment de réception de batterie (30, 31) dans lequel une batterie (32) peut être insérée et auquel est associé un dispositif de verrouillage (60) pour verrouiller la batterie (32) dans le compartiment de réception de batterie (30), le dispositif de verrouillage (60) présentant un organe de verrouillage (65) qui peut pivoter en va-et-vient autour d'un axe de pivotement (69) entre une position de verrouillage et une position de libération et qui présente un élément de verrouillage (124) qui fait saillie dans le compartiment de réception de batterie (30) dans la position de verrouillage et libère le compartiment de réception de batterie (30) dans la position de libération, l'organe de blocage (65) étant précontraint dans la position de verrouillage au moyen d'un élément de ressort (108), **caractérisé en ce que** l'organe de verrouillage (65) présente un premier tourillon (87) et un second tourillon (89) qui sont orientés de manière opposée et coaxiale à l'axe de pivotement (69), le premier tourillon (87) plongeant dans une bague de palier (91), qui entoure le premier tourillon (87) dans la direction circonférentielle, et le second tourillon (89) vient en prise dans un premier logement de tourillon (93), qui entoure le second tourillon (89) au moins partiellement dans la direction circonférentielle.

2. Appareil électrique selon la revendication 1, **caractérisé en ce que** le premier logement de tourillon (93) forme une première fourche de palier (95).

3. Appareil électrique selon la revendication 1 ou 2, **caractérisé en ce que** l'organe de verrouillage (65) forme un levier de verrouillage à deux bras (67).

4. Appareil électrique selon l'une quelconque des revendications 1 à 3, **caractérisé en ce que** l'élément de ressort forme un ressort à branches (108) avec une section de ressort (112) entourant le second tourillon (89) en forme d'hélice, à partir de laquelle une première branche (106) et une seconde branche (110) font saillie, la première branche (106) étant maintenue sur le second tourillon (89) et la seconde branche (110) reposant sur un dispositif de support (113), le second tourillon (89) présentant de préférence un évidement (104) qui reçoit la première branche (106), l'évidement (104) étant réalisé de préférence en forme de fente.

5. Appareil électrique selon la revendication 4, **caractérisé en ce que** le au moins un compartiment de réception de batterie (30, 31) est séparé au moyen d'une paroi intermédiaire (38) d'un espace de réception de verrouillage (63) dans lequel est agencé le dispositif de verrouillage (60, 61) associé au compartiment de réception de batterie (30, 31), le dispositif de support (113) étant formé par la face arrière (85) de la paroi intermédiaire (38) tournée vers l'espace de verrouillage (63) et par une saillie de paroi (101) de la paroi intermédiaire (38), de préférence **en ce que** le second tourillon (89) présente une face frontale libre (99) qui est opposée à la saillie de paroi (101).

6. Appareil électrique selon la revendication 5, **caractérisé en ce que** la saillie de paroi (101) forme une nervure d'appui (103) qui pénètre dans l'espace de réception de verrouillage (63) à partir de la paroi intermédiaire (38), la nervure d'appui (103) étant de préférence déformable élastiquement, la face frontale libre (99) du second tourillon de palier (89) reposant de préférence contre la nervure d'appui (103).

7. Appareil électrique selon l'une quelconque des revendications précédentes, **caractérisé en ce que** le dispositif de verrouillage (60) présente un second logement de tourillon (114) qui entoure partiellement le premier tourillon (87) dans la direction périphérique, le second logement de tourillon (114) formant de préférence une seconde fourche de palier (116).

8. Appareil électrique selon la revendication 7, **caractérisé en ce que** le levier de verrouillage (67) présente deux éléments de butée (118, 120) qui reposent sur les côtés tournés l'un vers l'autre des deux logements de tourillon (93, 114) .

9. Appareil électrique selon l'une quelconque des revendications précédentes, **caractérisé en ce que** l'élément de verrouillage (124) traverse une ouverture (134) d'une paroi intermédiaire (38) délimitant le compartiment de réception de batterie (30) associé dans la position de verrouillage de l'organe de verrouillage (65), au moins une section de surface (130) d'une surface finale (128) de l'élément de verrouillage (124) opposée à l'axe de pivotement (69) de l'organe de verrouillage (65) étant disposée sur une section de bord (138) de l'ouverture (134) au moins dans la position de libération de l'organe de verrouillage (65).

10. Appareil électrique selon la revendication 9, **caractérisé en ce que** la surface d'extrémité (128) de l'élément de verrouillage (118) opposée à l'axe de pivotement (69) de l'organe de verrouillage (65) présente une première section de surface (130) et une seconde section de surface (132), la première section de surface (130) étant agencée dans la position de libération de l'organe de verrouillage (65) au niveau de la section de bord (138) de l'ouverture (134), et la seconde section de surface (132) étant agencée dans la position de verrouillage de l'organe de verrouillage (65) au niveau de la section de bord (138) de l'ouverture (134) .

11. Appareil électrique selon l'une quelconque des revendications précédentes, **caractérisé en ce qu'**un élément d'actionnement (73) est associé à l'organe de verrouillage (65) et l'organe de verrouillage (65) peut être déplacé de la position de verrouillage à la position de libération en actionnant manuellement l'élément d'actionnement (73) à l'encontre de la force élastique de l'élément de ressort (108) .

12. Appareil électrique selon la revendication 11, **caractérisé en ce que** l'élément d'actionnement (73) présente un bouton-pression (75).

13. Appareil électrique selon la revendication 11 ou 12, **caractérisé en ce que** l'élément d'actionnement (73) présente un élément d'entraînement (83) qui, lors de l'actionnement de l'élément d'actionnement (73), glisse le long d'une surface de glissement (81) de l'organe de verrouillage (65).

14. Appareil électrique selon la revendication 11, 12 ou 13, **caractérisé en ce qu'**une pièce de poussée (53) est agencée dans le au moins un compartiment de réception de batterie (30, 31), la batterie (32) insérée dans le compartiment de réception de batterie respectif (30, 31) pouvant être déplacée à partir de la pièce de poussée (53) dans une position de prélèvement après l'actionnement de l'élément d'actionnement (73).
